# EUROPÄISCHE PATENTSCHRIFT

(11) **EP 1 192 853 B1**
(45) Veröffentlichungstag und Bekanntmachung des Hinweises auf die Patenterteilung: **20.09.2006**
(21) Anmeldenummer: 00810892.0
(22) Anmeldetag: 27.09.2000
(51) Int. Cl.: A01G 25/02, A01G 25/06, B23K 26/08, B29C 47/02

(54) **Verfahren zur kontinuierlichen Herstellung von Tropfbewässerungsrohren**
Method for the continuous production of pipes for drip irrigation
Procédé de fabrication en continu de tuyaux d'irrigation goutte-à-goutte

(43) Veröffentlichungstag der Anmeldung: 03.04.2002
(73) Patentinhaber: Kertscher, Eberhard, 1462 Yvonand (CH)
(72) Erfinder: Kertscher, Eberhard, 1462 Yvonand (CH)
(74) Vertreter: BOVARD AG

(56) Entgegenhaltungen:
- EP-A- 0 378 335
- EP-A- 0 715 926
- US-A- 3 874 598
- US-A- 4 095 084
- US-A- 5 684 617

## Beschreibung

Die vorliegende Erfindung bezieht sich auf ein Verfahren zur kontinuierlichen Herstellung von Tropfbewässerungsrohren gemäss dem Oberbegriff des Patentanspruchs 1.

Derartige Tropfbewässerungsrohre werden zur direkten Bewässerung von Pflanzen verwendet. Hierzu ist im Bereich jeder Pflanze in diesem Rohr ein Dosierelement angebracht, durch welches das Wasser über eine Bohrung aus dem Tropfbewässerungsrohr tropfweise ausgelassen wird. Durch diese direkte tropfweise Bewässerung der einzelnen Pflanzen wird nicht in unnötiger Weise eine grosse Menge des Wassers verschwendet, wie dies üblicherweise bei Bewässerungsanlagen geschieht, mittels welchen das Wasser durch Spritzanlagen grossflächig verteilt wird. Mit der Tropfbewässerung wird ein äusserst wirtschaftliches System angewendet, das Wasser kann sehr sparsam eingesetzt werden.

Die Herstellung derartiger Tropfbewässerungsrohre erfolgt in bekannter Weise durch eine Extrusion eines Kunststoffmaterials, wobei während des Extrudierens die Dosierelemente im gewünschten Abstand in das Rohr eingeführt werden. Danach muss in die Wandung des Rohrkörpers in der richtigen Position ein Loch angebracht werden, welches das tröpfchenweise Austreten des Wassers ermöglicht.

Je nach Anwendungszweck werden Tropfbewässerungsrohre unterschiedlicher Konzeption verwendet. Für die Bewässerung von Pflanzen, die alljährlich neu angepflanzt werden müssen, werden Tropfbewässerungsrohre verwendet, die sehr dünnwandig sind und deren Lebensdauer auf ein Jahr ausgelegt ist. Mit der Neuanpflanzung werden auch neue Tropfbewässerungsrohre oberflächlich verlegt. Bei mehrjähriger Verwendung werden Tropfbewässerungsrohre eingesetzt, deren Lebensdauer entsprechend grösser ist, und die sich insbesondere durch eine grössere Wandstärke auszeichnen. Diese Rohre können ebenfalls oberflächlich verlegt werden, es ist aber auch denkbar, dass sie in das Erdreich eingelegt werden.

Es ist bekannt, bei der Herstellung dieser Tropfbewässerungsrohre die Löcher durch mechanische Bohreinrichtungen anzubringen. Es hat sich aber gezeigt, dass dieses Verfahren relativ langsam ist, was sich auf die Wirtschaftlichkeit der Herstellung auswirkt. Des weiteren werden die Schneidflächen der Bohrwerkzeuge relativ schnell stumpf, oder das relativ weiche Material, aus dem der Rohrkörper gebildet ist, baut sich auf diesen Schneidflächen auf, so dass die Schneidwirkung mit der Zeit stark nachlässt. Somit müssen die Bohrwerkzeuge relativ rasch ersetzt werden, was das Herstellungsverfahren verteuert.

Aus der EP-A-0 715 926 ist ein Verfahren zur Herstellung von Tropfbewässerungsrohren bekannt, bei welchem die Löcher mittels eines in einer Laseranordnung erzeugten Laserstrahls angebracht werden. Mit dieser Anordnung kann die Produktivität gegenüber dem oben erwähnten Verfahren mit der Verwendung einer mechanischen Bohreinrichtung stark erhöht werden. Die Verwendung des Lasers des Typs Nd/YAG erlaubt aber nur die Herstellung von Tropfbewässerungsrohren mit dünner Wandung von maximal 0,6 mm, da bei dickerer Wandung die Energiedichte des Laserstrahls so erhöht werden müsste, dass neben der Wandung auch das sich darunter befindende Dosierelement durchbohrt würde.

Die Aufgabe der Erfindung besteht nun darin, ein Verfahren zur kontinuierlichen Herstellung von Tropfbewässerungsrohren zu schaffen, mit welchem auch die dickwandigeren Rohre mit hoher Produktionsgeschwindigkeit und somit wirtschaftlich hergestellt werden können.

Erfindungsgemäss erfolgt die Lösung dieser Aufgabe durch die im Patentanspruch 1 aufgeführten Merkmale.

Damit können Tropfbewässerungsrohre in produktiver Weise hergestellt werden, bei welchen gewährleistet ist, dass das Loch in der Wandung optimal ausgestaltet ist, ohne dass das darunterliegende Material des Dosierelementes beschädigt wird, wodurch ein optimales Funktionieren dieser Tropfbewässerungsrohre erreicht wird.

Hierbei wird der Rohrkörper des Tropfbewässerungsrohres bei der Herstellung derart an der optischen Einrichtung vorbeigeführt, dass der Bereich, in welchem jeweils das mit dem Laserstrahl erzeugte Loch zu liegen kommt, von der optischen Einrichtung im wesentlichen den Abstand a hat, in welchem der Laserstrahl eine Linie mit hoher Energiedichte aufweist. Dadurch wird erreicht, dass in optimaler Weise das Teilchen aus der Wandung ausgeschnitten wird, gleichzeitig wird das sich darunter befindende Dosierelement nicht beschädigt, da in diesem Bereich die Energiedichte des Laserstrahls bereits wieder wesentlich geringer ist als auf der Höhe der Wandung.

Die Vorbeiführung des Rohrkörpers des Tropfbewässerungsrohres an der optischen Einrichtung erfolgt mit im wesentlichen kontinuierlicher Vorschubgeschwindigkeit. Dadurch kann der Vorschubantrieb einen einfachen Aufbau haben, gleichzeitig wird durch die kontinuierliche Extrusion des Materials die Qualität des Rohres gewährleistet.

Um die Abmessungen des Loches in der Wandung des Rohrkörpers möglichst genau zu halten, ist die optische Einrichtung in vorteilhafter Weise so ausgebildet, dass der Laserstrahl während des Anbringens des Loches mit dem vorgeschobenen Rohrkörper mitgeführt wird.

In vorteilhafter Weise wird zur Anbringung der Löcher in der Wandung des Rohrkörpers aufgrund seiner Wellenlänge ein CO₂-Laser verwendet, mit welchem optimale Schneideigenschaften erreicht werden.

Um eine Beschädigung des Dosierelementes bei der Anbringung des entsprechenden Loches in der Wandung des Rohrkörpers völlig auszuschliessen, kann dieser Bereich der zweiten Kammer mit einer Schutzabdeckung versehen sein, die vorteilhafterweise aus einem metallischen Material besteht, wodurch der auf diesen Bereich auftreffende Laserstrahl grösstenteils reflektiert wird.

Eine weitere vorteilhafte Ausgestaltung der Erfindung besteht darin, dass das durch den Laserstrahl ausgeschnittene Teilchen mit einer Absaugeinrichtung abgesaugt wird, wodurch vermieden werden kann, dass dieses Teilchen gegebenenfalls in die zweite Kammer gelangen könnte und möglicherweise das Loch verstopfen könnte.

Die Erfindung wird nachfolgend anhand der beiliegenden Zeichnung beispielhaft näher erläutert.

Es zeigt
Fig. 1 in schematischer Darstellung die Herstellung des Tropfbewässerungsrohres;
Fig. 2 im Schnitt einen vergrösserten Ausschnitt der Wandung des Rohrkörpers mit eingesetztem Dosierelement, bei welchem die Auswirkungen ersichtlich sind, wenn ein konventioneller Laserstrahl zur Anbringung des Loches verwendet wird;
Fig. 3 in schematischer Darstellung den Verlauf des Laserstrahls zum Anbringen des Loches in die Wandung des Tropfbewässerungsrohres beim erfindungsgemässen Verfahren; und
Fig. 4 einen Längsschnitt durch den Rohrkörper im Bereich des eingesetzten Dosierelementes.

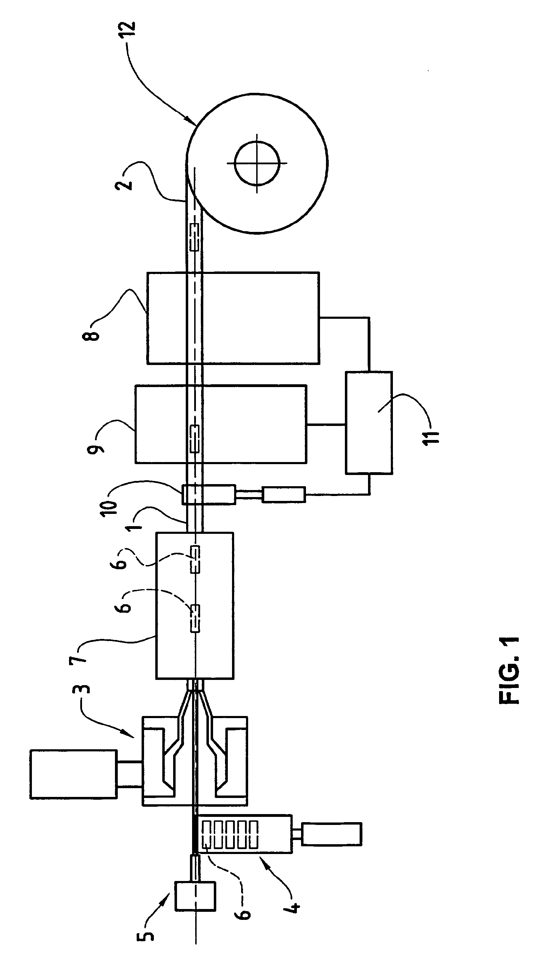

Wie aus Fig. 1 ersichtlich ist, wird der Rohrkörper 1 des Tropfbewässerungsrohres 2 in bekannter Weise durch eine Extrusionsvorrichtung 3 in kontinuierlicher Weise gebildet. In diesen extrudierten Rohrkörper 1 wird aus einem Magazin 4 über eine Zuführeinrichtung 5 jeweils ein Dosierelement 6 eingesetzt, das vom vorhergehenden einen vorbestimmten Abstand hat. Der extrudierte Rohrkörper 1 wird dann mit den eingesetzten Dosierelementen 6 durch eine Kalibrier- und Kühlvorrichtung 7 geführt, in welcher eine dichte Verbindung zwischen Rohrkörper 1 und Dosierelement 6 erhalten wird, wie später noch beschrieben wird.

Der Rohrkörper 1 mit den eingesetzten Dosierelementen 6 wird durch eine Vorschubeinrichtung 8 durch eine Laseranordnung 9 geleitet, wobei die Vorschubgeschwindigkeit vorteilhafterweise konstant ist. In der Laseranordnung 9 wird durch einen Laserstrahl das die Wandung des Rohrkörpers 1 durchdringende Loch angebracht.

Über eine Detektoreinrichtung 10 kann in bekannter Weise festgestellt werden, an welcher Position die Dosierelemente 6 beim durchlaufenden Rohrkörper 1 angeordnet sind. Diese Detektoreinrichtung 10 gibt ein entsprechendes Signal an einer Steuereinrichtung 11 ab, welche ebenfalls mit der Vorschubeinrichtung verbunden ist. Mit Berücksichtigung der Vorschubgeschwindigkeit des durchlaufenden Rohrkörpers 1 kann bei Kenntnis des Abstandes der Detektoreinrichtung 10 vom Laserstrahl in der Laseranordnung 9 dieser Laserstrahl im richtigen Moment auf den Rohrkörper 1 gerichtet werden, so dass das die Wandung durchdringende Loch über dem gewünschten Bereich des Dosierelementes 6 angebracht wird. Das so fertiggestellte Tropfbewässerungsrohr 2 kann beispielsweise danach auf eine Wickelvorrichtung 12 aufgewickelt werden.

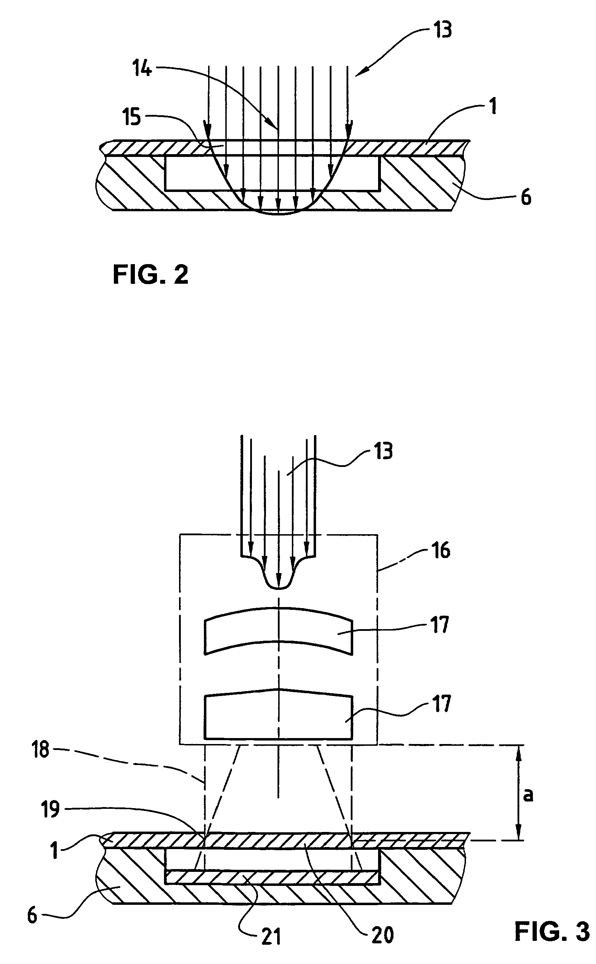

Wenn nun ein Loch in einem Rohrkörper 1 eines Tropfbewässerungsrohres mit einem üblichen Nd/YAG- oder CO₂-Laser angebracht werden soll und die Dicke der Wandung des Rohrkörpers 1 beispielsweise mehr als ein Millimeter beträgt, ergibt sich die Situation, wie sie in Fig. 2 dargestellt ist. Der Laserstrahl 13 trifft auf die Wandung des Rohrkörpers 1. Da der Laserstrahl 13 in seinem zentralen Bereich 14 die grösste Energiedichte aufweist, wird das Material der Wandung des Rohrkörpers 1 zunächst in diesem zentralen Bereich 14 verbrannt bzw. verdampft. Ein erstes Durchdringen des Materials der Wandung des Rohrkörpers 1 erfolgt somit in diesem zentralen Bereich 14. Danach wird das so gebildete Loch 15 im Durchmesser erweitert, zwischenzeitlich gelangt der energiereiche zentrale Bereich 14 des Laserstrahls 13 aber bereits auf das sich hinter der Wandung des Rohrkörpers 1 befindliche Material des Dosierelementes 6. Das Material wird zerstört. Bevor der gewünschte Durchmesser des Loches 15 erreicht ist, kann eine Durchbohrung des Dosierelementes 6 erfolgen, was absolut unerwünscht ist, da das Dosierelement 6 dann seine Funktion nicht mehr erfüllen kann.

In der Laseranordnung 9, wie sie in der Einrichtung gemäss Fig. 1 verwendet wird, wird somit eine optische Einrichtung 16 angeordnet, wie aus Fig. 3 ersichtlich ist. Diese optische Einrichtung 16 umfasst ein Linsensystem (z.B. ein Axicon), wobei die Linsen nur schematisch dargestellt sind. Der Laserstrahl 13 wird durch diese optische Einrichtung 16 bzw. durch das Linsensystem 17 geführt. Der Laserstrahl 13 wird hierbei in eine Ringform 18 umgewandelt. Die Strahlen werden hierbei so "gebündelt", dass im Abstand a von der optischen Einrichtung 16 quasi eine Linie 19 ("Brennlinie") entsteht, in deren Bereich die Energiedichte hoch ist.

Der Rohrkörper 1 wird nun so an der optischen Einrichtung 16 vorbeigeführt, dass die Wandung des Rohrkörpers 1, in welcher jeweils das mit dem Laserstrahl 13 erzeugte Loch 15 zu liegen kommt, von dieser optischen Einrichtung 16 den Abstand a hat. Die Ringform 18 des Laserstrahls 13 schneidet dann aus der Wandung dieses Rohrkörpers 1 ein Teilchen 20 aus, welches durch eine unmittelbar neben der "Schneidvorrichtung" angeordnete, nicht dargestellte Absaugeinrichtung abgesaugt wird.

Das Ausschneiden des Teilchens 20 aus der Wandung des Rohrkörpers 1 erfolgt über den gesamten Umfang gleichzeitig. Sobald das Teilchen 20 ausgeschnitten ist, kann somit die Laserbearbeitung sofort beendet werden. Der Strahl, der nach dem Ausschneiden des Teilchens 20 noch auf das Material des Dosierelementes 6 gelangt, beschädigt hier somit das Material praktisch nicht, einerseits wegen der sehr kleinen Zeitdauer, andererseits auch, weil die Energiedichte des Strahls in diesem Bereich bereits wieder wesentlich kleiner ist, als im Bereich der Linie 19, da der Strahl bereits wieder "gestreut" wird.

Um jegliche Beschädigung des Materials des Dosierelementes 6 im Bereich der Laserbearbeitung zu vermeiden, kann eine Schutzabdeckung 21 eingesetzt werden, die beispielsweise aus Aluminium oder aus einem anderen metallischen Material besteht. Diese Schutzabdeckung 21 reflektiert den auftreffenden Laserstrahl grösstenteils.

Damit die Anbringung der Löcher mit grösstmöglicher und im wesentlichen gleichbleibender Vorschubgeschwindigkeit erfolgen kann, ist die optische Einrichtung so ausgebildet, dass der Laserstrahl während des Ausschneidens des Teilchens 20 mit dem vorgeschobenen Rohrkörper 1 mitlaufend ist. Dies kann in bekannter, nicht dargestellter Weise durch Verschwenken der optischen Einrichtung 16 erfolgen, dies kann aber auch durch Verwendung eines schwenkbaren Spiegels erreicht werden, wobei die Steuerung dieser Bewegungen durch die Steuereinrichtung 11 (Fig. 1) erfolgen könnte. Dabei wird auch die Kontur des Loches 15 optimal. Mit dieser Vorgehensweise können Tropfbewässerungsrohre, die beispielsweise einen Durchmesser von etwa 10 ÷ 30 mm und eine Wanddicke von etwa 0,6 ÷ 3 mm haben, mit hoher Produktionsgeschwindigkeit hergestellt werden.

Die Ringform 18 des Laserstrahls ist vorteilhafterweise kreisrund. Selbstverständlich wären aber auch andere Ringformen denkbar, die über eine geeignete Optik gebildet werden können.

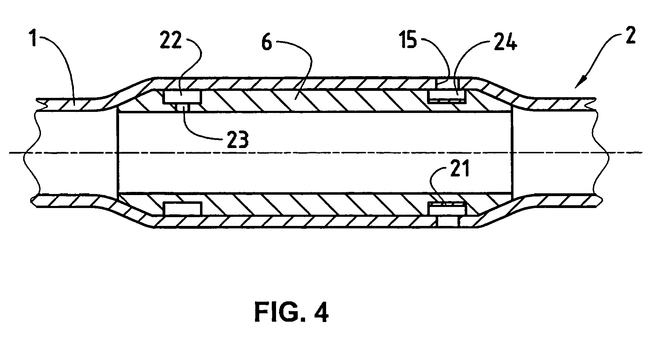

In Fig. 4 ist ein Ausschnitt eines Tropfbewässerungsrohres 2 im Schnitt dargestellt, bei welchem das Dosierelement 6 als Hohlzylinder ausgeführt ist. Wie bereits erwähnt, wird dieses Dosierelement 6 im Extrusionsvorgang zur Herstellung des Rohrkörpers 1 eingesetzt. In der Kalibrier- und Kühleinrichtung 7 (Fig. 1) legt sich der Rohrkörper 1 in absolut dichter Weise an die Aussenseite des Dosierelementes 6 an.

Das hier dargestellte Dosierelement 6 weist eine erste Kammer 22 auf, die über mindestens eine Öffnung 23 mit dem Innenraum des Dosierelementes 6 bzw. des Rohrkörpers 1 verbunden ist. Das durch das Tropfbewässerungsrohr 2 hindurchgeleitete Wasser gelangt über diese Öffnung 23 in die erste Kammer 22 des Dosierelementes 6, die ringförmig ausgebildet ist. Im Dosierelement 6 ist eine zweite Kammer 24 angeordnet, die von der ersten Kammer 22 beabstandet ist. Auch diese zweite Kammer 24 ist im vorliegenden Ausführungsbeispiel ringförmig ausgebildet. Wie vorgängig beschrieben worden ist, wird im Bereich dieser zweiten Kammer 24 das Loch 15 mittels Laser angebracht. Zwischen der ersten Kammer 22 und der zweiten Kammer 24 ist im Dosierelement 6 in bekannter Weise eine Labyrinthanordnung, die nicht dargestellt ist, angeordnet. Das Wasser gelangt somit aus dem Innenraum des Rohrkörpers 1 über die Öffnung 23 in die erste Kammer 22 und über die Labyrinthanordnung in die zweite Kammer 24, aus welcher sie über die Löcher 15 austreten und die Pflanze mit Wasser versorgen kann. Wegen der Labyrinthanordnung tritt das Wasser durch das Loch 15 jeweils nur tropfweise aus. Die Wahl der Labyrinthanordnung und der Abmessungen der Löcher 15 ergeben die Anzahl Tropfen pro Zeiteinheit, die durch das Loch 15 austreten.

In dieser Fig. 4 ist ersichtlich, dass die Schutzabdeckung 21, mit welcher der Grund der zweiten Kammer 24 ausgestattet ist, um eine Beschädigung des Dosierelementes 6 während der Laserbearbeitung zu vermeiden, die Form eines Ringes aufweist. Die Schutzabdeckung 21 könnte beispielsweise aber auch durch Aufdampfen einer Metallschicht auf den entsprechenden Bereich des Dosierelementes 6 erhalten werden.

Selbstverständlich muss das Dosierelement 6 nicht eine hohlzylindrische Form aufweisen, wie vorgängig beschrieben worden ist, es ist auch denkbar, als Dosierelement eine flaches Teil zu verwenden, das während des Extrusionsvorganges zur Bildung des Rohrkörpers in diesen eingeklebt wird, wie dies beispielsweise in der vorgängig beschriebenen EP-A-0 715 926 dargestellt ist.

Als Material für den Rohrkörper 1 des Tropfbewässerungsrohres 2 eignet sich Polyaethylen, auch die Dosierelemente 6 können aus diesem Material gefertigt sein, es sind aber auch ohne weiteres andere Materialien verwendbar, die die gewünschten Voraussetzungen erfüllen können.

## Patentansprüche

1. Verfahren zur kontinuierlichen Herstellung von Tropfbewässerungsrohren (2), deren Rohrkörper (1) mittels eines Extrusionsvorgangs eines Kunststoffs erhalten werden, in welchen während des Extrusionsvorgangs Dosierelemente (6) mit einem Abstand voneinander eingesetzt werden, welche jeweils eine mit dem Innenraum des Rohrkörpers (1) verbundene erste Kammer (22) aufweisen, die über ein Labyrinth mit einer im jeweiligen Dosierelement (6) vorgesehenen zweiten Kammer (24) verbunden ist, die dichtend an die Innenfläche des Rohrkörpers (1) angelegt wird, und in welchen Rohrkörper (1) im Bereich der zweiten Kammer (24) des jeweiligen Dosierelements (6) mit einem in einer Laseranordnung (9) erzeugten Laserstrahl (13) mindestens ein die Wandung durchdringendes Loch (15) angebracht wird, **dadurch gekennzeichnet, dass** eine optische Einrichtung (16) verwendet wird, durch welche der Laserstrahl (13) geführt wird, und womit erreicht wird, dass der Laserstrahl (13) in eine Ringform (18) umgewandelt wird, bei welcher in einem Abstand (a) von der optischen Einrichtung (16) im wesentlichen eine der Ringform entsprechende Linie (19) mit hoher Energiedichte gebildet wird, **dass** der Rohrkörper (1) des Tropfbewässerungsrohres (2) im wesentlichen mit dem Abstand (a) an der optischen Einrichtung (16) vorbeigeführt und ein Teilchen (20) aus der Wandung ausgeschnitten wird, und dass die Energiedichte des weiterlaufenden Laserstrahls (13) geringer wird, so dass das in diesem Bereich angeordnete Dosierelement (6) praktisch nicht beschädigt wird.

2. Verfahren nach Anspruch 1, **dadurch gekennzeichnet, dass** die Vorbeiführung des Rohrkörpers (1) des Tropfbewässerungsrohres (2) an der optischen Einrichtung (16) mit im wesentlichen kontinuierlicher Vorschubgeschwindigkeit vorgenommen wird.

3. Verfahren nach Anspruch 2, **dadurch gekennzeichnet, dass** die optische Einrichtung (16) so ausgebildet wird, dass der Laserstrahl (13) während des Anbringens des Loches (15) mit dem vorgeschobenen Rohrkörper (1) mitgeführt wird.

4. Verfahren nach einem der Ansprüche 1 bis 3, **dadurch gekennzeichnet, dass** zur Anbringung der Löcher (15) in der Wandung des Rohrkörpers (1) mit einem CO₂-Laser gearbeitet wird.

5. Verfahren nach einem der Ansprüche 1 bis 4, **dadurch gekennzeichnet, dass** der Grund der zweiten Kammer (24) mindestens im Bereich des jeweils anbringbaren Loches (15) in der Wandung des Rohrkörpers (1) mit einer Schutzabdeckung (21) ausgestattet wird.

6. Verfahren nach einem der Ansprüche 1 bis 5, **dadurch gekennzeichnet, dass** das durch den Laserstrahl (13) ausgeschnittene Teilchen (20) mit einer Absaugeinrichtung abgesaugt wird.

7. Verfahren nach einem der Ansprüche 1 bis 6, **dadurch gekennzeichnet, dass** der Rohrkörper (1) aus Polyäthylen hergestellt wird.

## Claims

1. Method for continuous manufacture of drip irrigation tubes (2), the tube bodies (1) of which are obtained by means of an extrusion step for a plastic, in which tube bodies dosing elements (6) are inserted during the extrusion step with a spacing from one another, which dosing elements each have a first chamber (22) connected to the interior space of the tube body (1), which first chamber is connected via a labyrinth to a second chamber (24) provided in the respective dosing element (6), which second chamber is disposed in a sealing way on the inner surface of the tube body (1), and in which tube bodies (1) at least one hole (15) penetrating the walling is made in the area of the second chamber (24) of the respective dosing element (6) with a laser beam (13) generated in a laser configuration (9), **characterised in that** an optical device (16) is used by means of which the laser beam (13) is directed, and whereby it is achieved that the laser beam (13) is converted into an annular form (18), a line (19) of high energy density being formed corresponding substantially to the ring shape at a separation (a) from the optical device (16), **in that** the tube body (1) of the drip irrigation tube (2) is directed past the optical device (16) with substantially the spacing (a), and a particle (20) is cut out of the walling, and **in that** the energy density of the continuing laser beam (13) becomes less, so that the dosing element (6) disposed in this region is virtually not damaged.

2. Method according to claim 1, **characterised in that** the directing of the tube body (1) of the drip irrigation tube (2) past the optical device (16) is undertaken with substantially constant rate of feed.

3. Method according to claim 2, **characterised in that** the optical device (16) is designed in such a way that the laser beam (13) is directed along with the advancing tube body (1) during the making of the hole (15).

4. Method according to one of the claims 1 to 3, **characterised in that** a CO₂ laser is used for the making of the holes (15) in the walling of the tube body (1).

5. Method according to one of the claims 1 to 4, **characterised in that** the floor of the second chamber (24) is provided with a protective covering (21) at least in the region of each hole (15) able to be made in the walling of the tube body (1).

6. Method according to one of the claims 1 to 5, **characterised in that** the particle (20) cut out by the laser beam (13) is suctioned with a suction device.

7. Method according to one of the claims 1 to 6, **characterised in that** the tube body (1) is made of polyethylene.

## Revendications

1. Dispositif de fabrication en continu de tuyaux d'irrigation goutte-à-goutte (2) dont les corps tubulaires (1) sont obtenus au moyen d'une opération d'extrusion d'une matière synthétique, dans lesquels pendant l'opération d'extrusion des éléments de dosage (6) sont insérés à distance les uns des autres, lesquels présentent une première chambre (22) reliée à l'espace intérieur du corps tubulaire (1), qui est relié par un labyrinthe à une seconde chambre (24) prévue dans l'élément de dosage respectif (6), qui est appliquée de manière étanche contre la surface interne du corps tubulaire (1) et corps tubulaire (1) dans lequel est ménagé au moins un trou (15) traversant la paroi dans la zone de la seconde chambre (24) de l'élément de dosage respectif (6) par au moins un rayon laser (13) généré dans un dispositif laser(9), **caractérisé en ce qu'**un dispositif optique (16) est utilisé guidant le rayon laser (13) et permettant que le rayon laser (13) soit transformé en une forme annulaire (18) pour laquelle à une distance (a) du dispositif optique (16), il est formé sensiblement une ligne (19), correspondant à la forme annulaire, de densité énergétique élevée, **en ce que** le corps tubulaire (1) du tuyau d'irrigation goutte-à-goutte (2) est passé à distance du dispositif optique (16) essentiellement à la distance (a) et une particule (20) de la paroi est découpée et **en ce que** la densité thermique du rayon laser (13) continuant à passer est plus faible de sorte que l'élément de dosage (6) disposé dans cette zone n'est pratiquement pas abîmé.

2. Procédé selon la revendication 1, **caractérisé en ce que** le guidage du corps tubulaire (1) du tuyau d'irrigation goutte-à-goutte (2) le long du dispositif optique (16) est effectué avec une vitesse d'avance sensiblement continue.

3. Procédé selon la revendication 2, **caractérisé en ce que** le dispositif optique (16) est réalisé de sorte que le rayon laser (13) est entraîné pendant la réalisation du trou (15) avec le corps tubulaire avancé (1).

4. Procédé selon l'une des revendications 1 à 3, **caractérisé en ce que** pour ménager les trous (15) dans la paroi du corps tubulaire (1), on travaille avec un laser CO2.

5. Procédé selon l'une des revendications 1 à 4, **caractérisé en ce qu'**au moins dans la zone du trou (15) pouvant être ménagée respectivement dans la paroi du corps tubulaire (1), le fond de la seconde chambre (24) est muni d'un recouvrement de protection (21).

6. Procédé selon l'une des revendications 1 à 5, **caractérisé en ce que** la particule (20) découpée par le rayon laser (13) est aspirée par un dispositif d'aspiration.

7. Dispositif selon l'une des revendications 1 à 6, **caractérisé en ce que** le corps tubulaire (1) est fabriqué en polyéthylène.
